# FASCICULE DE BREVET EUROPEEN

(11) **EP 0 458 056 B1**
(45) Date de publication et mention de la délivrance du brevet: **18.01.1995**
(21) Numéro de dépôt: 91105957.4
(22) Date de dépôt: 15.04.1991
(51) Int. Cl.: H02K 21/16

(54) **Moteur électromagnétique**
Elektromagnetischer Motor
Electromagnetic motor

(30) Priorité: 23.04.1990 FR 9005240
(43) Date de publication de la demande: 27.11.1991
(73) Titulaire: Eta SA Fabriques d'Ebauches, 2540 Granges (CH)
(72) Inventeur: Taghezout, Daho, CH-1006 Lausanne (CH); Strahm, Martin, CH-2017 Boudry (CH)
(74) Mandataire: Caron, Gérard

(56) Documents cités:
- WO-A-89/02670
- DE-C- 3 900 691
- FR-A- 2 464 516
- GB-A- 2 054 978

## Description

La présente invention concerne un moteur électromagnétique, particulièrement apte à fonctionner avec un mode d'alimentation polyphasé, et de préférence triphasé.

Ce type de moteur qui est notamment décrit dans le brevet CH 540 597, comporte généralement, d'une part, un rotor pourvu d'un aimant permanent du type bipolaire et conformé pour délivrer un couple moteur à un mécanisme à entraîner, et d'autre part, un stator sur lequel sont disposées trois bobines d'excitation respectivement pilotées par un circuit de commande approprié.

Le stator est pourvu d'une partie statorique périphérique de forme essentiellement circulaire qui forme autour du rotor un circuit magnétique à faible reluctance. Trois branches s'étendent de cette partie statorique périphérique en direction de l'axe de rotation du rotor pour former, par l'intermédiaire de leur extrémité libre, trois épanouissements polaires.

Ces branches sont orientées de façon normale à l'axe de rotation du rotor et elles présentent des axes géométriques longitudinaux concourant sensiblement au niveau de l'axe de rotation du rotor et décalés entre eux de 120°. Chacune des bobines d'excitation qui peut être alimentée par l'une des phases de l'alimentation via le circuit de commande, est montée sur l'une des branches et génère un flux magnétique. En pilotant le circuit de commande, on associe au champ permanent de l'aimant généralement plusieurs flux magnétiques, ce qui par création d'un couple mutuel, fait pivoter le rotor.

Ce type de moteur présente de nombreux avantages.

Il offre un bon rendement, mais aussi il se prête particulièrement bien, tant au fonctionnement en rotation continue qu'au fonctionnement en mode bidirectionnel.

Toutefois, avec un tel moteur, à cause de sa structure particulière telle qu'on l'a définie ci-dessus, on se heurte à des problèmes de coûts de fabrication élevés, ce qui limite bien évidemment son intérêt, surtout lorsqu'il doit être utilisé à titre de transducteur ou encore d'actionneur en un nombre d'exemplaires relativement élevé pour chaque produit comme c'est généralement le cas dans des applications telles que la robotique, l'automobile, l'aéronautique, l'aérospatial ou encore l'ingénierie biomédicale. En effet, le moteur précédemment décrit a essentiellement pour vocation le développement de puissances relativement élevées, par exemple pour la traction de véhicules, si bien qu'il n'a pas été conçu pour pouvoir être réalisé en très grandes séries, à un faible coût, mais simplement pour pouvoir offrir des caractéristiques de sortie suffisantes.

D'autres exemples de moteurs réalisés selon l'art antérieur sont décrits dans les documents WO-A-8902670 et GB-A-2054978.

Aussi, la présente invention a-t-elle pour but de remédier à ces inconvénients en fournissant un moteur électromagnétique susceptible de fonctionner avec un mode d'alimentation polyphasé, et de préférence triphasé, de construction simple, c'est-à-dire pouvant être réalisé en très grandes séries, à un prix de revient très faible.

Ainsi, la présente invention a pour objet un moteur électromagnétique susceptible de fonctionner avec un mode d'alimentation n-phasé, n étant ≧ 3 et du type comprenant :
- un rotor qui comporte un aimant permanent de préférence bipolaire et qui est susceptible de délivrer un couple moteur à un mécanisme à entraîner,
- un stator pourvu, d'une part, d'une partie statorique périphérique formant un circuit magnétique à faible reluctance, et d'autre part, d'une partie statorique intérieure conformée pour recevoir le rotor, cette partie statorique intérieure étant entourée par la partie statorique périphérique,
- n bobines liées magnétiquement au rotor et susceptibles de fournir un flux magnétique par l'intermédiaire d'un noyau, ces bobines pouvant être reliées par l'intermédiaire d'un circuit de commande à une alimentation électrique pour être alimentées respectivement par n phases de cette alimentation,
- n pièces de guidage du flux magnétique ménagées sur la partie statorique intérieure et comportant des premières et secondes extrémités, lesdites premières extrémités formant respectivement n épanouissements polaires et n pièces polaires, ledit rotor étant monté pivotant entre ces épanouissements polaires et à une certaine distance de ceux-ci qui forme au moins un premier entrefer, tandis que les bobines sont magnétiquement couplées auxdits épanouissements polaires par l'intermédiaire desdites branches, ce moteur étant caractérisé en ce que ladite partie statorique intérieure est une plaque mince ayant une forme d'étoile dont les branches qui forment lesdites pièces de guidage du flux magnétique s'étendent vers la partie statorique périphérique lesdites bobines étant rapportées et respectivement ancrées mécaniquement au moins aux secondes extrémités ou extrémités libres desdites branches.

Selon un mode de réalisation préféré, les bobines sont ancrées sur lesdites branches par l'intermédiaire de leur noyau qui est rapporté sur au moins l'une de ces branches.

On précisera aussi que les parties statoriques intérieure et périphérique sont formées essentiellement par une pièce statorique unique et monolithique en association avec les n bobines.

De plus, les n bobines sont montées sur la pièce statorique indépendamment du montage de cette pièce sur un support, les n bobines étant rapportées sur cette pièce et étant susceptibles d'être remplacées indifféremment avant ou après montage de la pièce statorique sur ledit support.

Selon encore un autre mode de réalisation, les deux parties statoriques respectivement périphérique et intérieure sont mécaniquement distinctes et indépendantes, la partie statorique intérieure qui est rapportée sur la partie statorique périphérique par l'intermédiaire des bobines d'excitation étant susceptible d'occuper par rapport à la partie statorique périphérique de multiples positions angulaires.

On comprendra que grâce à tous ces modes de réalisation, on a réalisé un moteur et plus particulièrement un transducteur ou actionneur électromagnétique pouvant fonctionner avec un mode d'alimentation polyphasé (et de préférence triphasé) dont les différents constituants peuvent être fabriqués de façon simple et à une cadence relativement élevée, l'assemblage de ces différents éléments rapportés entre eux donnant lieu à des opérations tout à fait classiques. Par ailleurs, on remarquera que la disposition de deux parties statoriques respectivement périphérique et intérieure offrent de nombreuses possibilités d'adaptation de ce moteur, qui permettent d'obtenir des caractéristiques de sortie différentes, sur la base d'une même construction, avec en plus la possibilité d'une optimisation totale du volume occupé par ce moteur.

Ce caractère modulable et cette optimisation du volume occupé ouvrent bien entendu le spectre d'utilisation de ce moteur, qui pour un volume extrêmement réduit offre une puissance de sortie suffisante pour l'application auquel il est destiné.

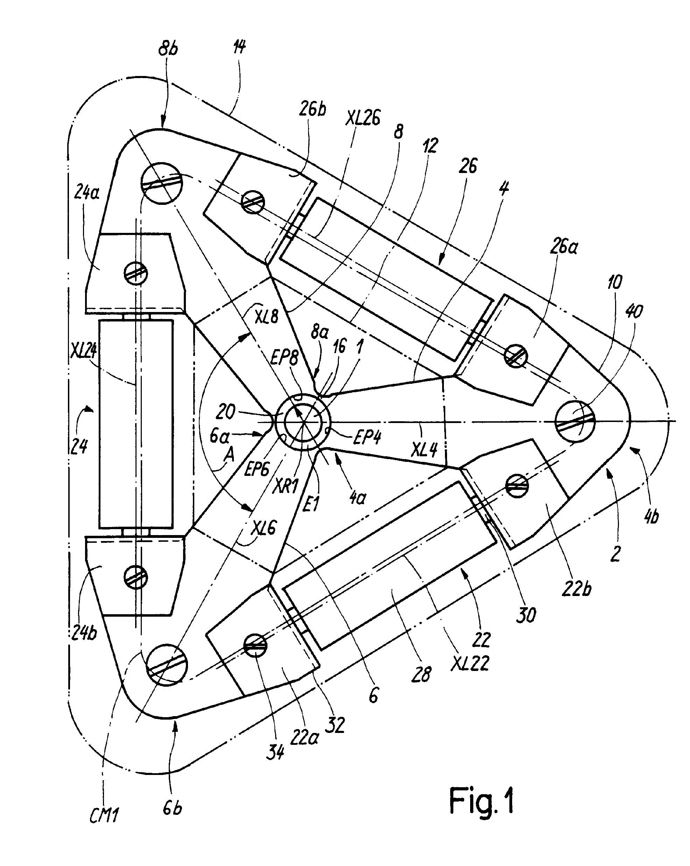

Mais d'autres avantages de l'invention apparaîtront mieux à la lecture de la description détaillée qui suit, prise en référence aux dessins annexés qui sont donnés uniquement à titre d'exemple, et dans lesquels les figures 1 à 5 sont des vues de dessus respectivement de cinq modes de réalisation du moteur selon l'invention.

Le moteur électromagnétique selon l'invention, tel que celui qui est représenté selon un premier mode de réalisation à la figure 1, comporte classiquement un rotor 1, qui est représenté ici de façon très schématique et qui est destiné à fournir un couple moteur à un mécanisme à entraîner, non représenté.

Ce moteur comporte par ailleurs un stator 2 comportant une pièce statorique 10 qui est réalisée sous forme d'une plaque emboutie en un matériau, de préférence à haute perméabilité magnétique par exemple en un alliage tel que celui vendu sous la marque "Vacoperm". Le stator 2 est susceptible d'interagir magnétiquement avec le rotor 1, soit pour lui faire occuper différentes positions d'équilibre stable, soit pour l'entraîner en rotation autour d'un axe de rotation XR1. Le rotor 1 est à cet effet monté libre en rotation par l'intermédiaire de pivots logés dans des paliers solidaires d'un support, ou par l'intermédiaire d'une cage rapportée (non représenté).

La pièce ou plaque statorique 10 du stator 2 comporte trois branches 4, 6 et 8 d'allure identique et décalées les unes des autres d'un angle A d'environ 120°. On remarque que les trois branches 4, 6 et 8 sont donc ménagées sur une même et unique pièce statorique 10 dont la région centrale, qui s'étend de l'axe de rotation du rotor XR1 jusqu'à la première ligne de contour représentée en traits mixtes interrompus, forme une partie statorique intérieure ou centrale 12 dont les régions extrêmes libres ou pointes constituent, de plus, des portions d'une partie statorique périphérique 14 qui s'étend entre la première et une deuxième ligne de contour représentées de même sur la figure 1 par des traits mixtes interrompus.

La pièce ou plaque statorique 10 et a fortiori la partie statorique intérieure 12 présentent une forme en étoile.

On remarquera que la partie statorique périphérique 14 présente quant à elle une allure générale de triangle isocèle et notamment de triangle équilatéral, en entourant, d'une part, le rotor 1 qui est disposé sensiblement en son centre, mais aussi d'autre part, la partie statorique intérieure ou centrale 12.

Cette forme en triangle équilatéral est une forme préférée de la partie statorique périphérique 14, mais bien entendu elle pourrait avoir une allure différente, par exemple circulaire.

La partie statorique centrale ou intérieure 12 est donc essentiellement constituée des trois branches 4, 6 et 8 et plus particulièrement de leur partie qui s'étend depuis le voisinage du rotor 1 vers l'extérieur du stator 2, à savoir vers la partie statorique périphérique 14. Ces trois branches 4, 6 et 8 présentent respectivement un axe géométrique longitudinal XL4, XL6 et XL8, ces trois axes longitudinaux XL4, XL6 et XL8 qui sont normaux à l'axe de rotation XR1 étant décalés l'un de l'autre de l'angle A. Ces axes longitudinaux XL4, XL6 et XL8 et plus particulièrement les branches 4, 6 et 8 qui les matérialisent, sont de préférence ménagés dans un même plan, qui constitue un plan de champ électromagnétique. A cet effet, on observera que ce moteur électromagnétique est du type à champ radial, puisque le ou les champs magnétiques qui sont créés dans le stator 2 présentent une orientation normale à l'axe de rotation du rotor XR1.

Les branches 4, 6 et 8 peuvent, tout au moins en partie, s'étendre dans des plans différents et être orientées parallèlement les unes aux autres et à l'axe de rotation XR1 du rotor.

Les trois branches 4, 6 et 8 présentent des première et seconde extrémités respectivement 4a, 6a, 8a et 4b, 6b, 8b; les premières extrémités 4a, 6a et 8a des trois branches 4, 6 et 8 formant des épanouissements polaires EP4, EP6 et EP8 en regard desquels le rotor 1 est susceptible de venir évoluer. A cet effet, on précisera que le rotor 1 comporte de préférence un aimant permanent de préférence du type bipolaire, à aimantation diamétrale classique nord-sud, cet axe d'aimantation ayant été matérialisé sur les figures par une flèche pointée en direction du pôle nord formé par cet aimant. Le moteur selon l'invention n'est pas limité à l'utilisation d'un rotor bipolaire mais pourrait bien entendu être équipé d'un rotor du type multipolaire.

On remarquera par ailleurs que les trois branches 4, 6 et 8 sont reliées magnétiquement et mécaniquement entre elles, sur la partie statorique centrale ou intérieure 12, par l'intermédiaire de leur première extrémité 4a, 6a et 8a.

Ces premières extrémités 4a, 6a et 8a sont dès lors reliées entre elles par des isthmes 16 qui ont pour fonction de constituer des moyens de saturation du flux magnétique qui est généré dans le stator 2, ces moyens étant définis comme premiers moyen de saturation du flux.

Ainsi, la région la plus centrale de la partie statorique intérieure 12 qui, comme on le remarquera, grâce à la disposition de ses branches 4, 6 et 8 a une allure générale de Y, est percée en son centre d'un orifice 20 dont la paroi latérale qui est continue et circulaire matérialise lesdits épanouissements polaires EP4, EP6 et EP8. Les branches 4, 6 et 8 constituent des pièces polaires de la pièce ou plaque statorique 10, et plus particulièrement de la partie statorique intérieure ou centrale 12.

Le rotor 1 est monté dans l'orifice 20 à une certaine distance du flanc latéral de celui-ci, et notamment à une certaine distance des épanouissements polaires EP4, EP6 et EP8, ce jeu consitutant un entrefer E1 que l'on définira ci-après comme premier entrefer.

La partie statorique périphérique 14, quant à elle, est constituée en partie par les secondes extrémités ou extrémités libres 4b, 6b et 8b desdites branches 4, 6 et 8 de la partie statorique intérieure 12 et plus particulièrement par la pointe de ces branches, mais aussi par des bobines 22, 24 et 26. Ces bobines 22, 24 et 26 qui ont une forme de préférence cylindrique sont constituées de façon classique d'un enroulement 28 d'un fil conducteur en de nombreuses spires, sur plusieurs rangées coaxiales, autour d'un noyau 30. Ces bobines 22, 24 et 26 sont toutes susceptibles de générer un flux magnétique en étant traversées par un courant électrique provenant d'une alimentation de préférence triphasée pilotée par un circuit de commande, généralement du type électronique (non représenté). Chacune de ces bobines peut être alimentée par l'une des trois phases de l'alimentation triphasée.

On remarquera ici qu'on dispose d'autant de bobines que l'on a de phases, mais aussi d'autant de phases que l'on a de branches et d'épanouissements et des pièces polaires sur le stator.

Les bobines 22, 24 et 26 qui dans un mode de fonctionnement le plus simple forment toutes des bobines d'excitation comportent respectivement des premières extrémités 22a, 24a et 26a et des secondes extrémités 22b, 24b et 26b. Ces bobines d'excitation 22, 24 et 26, et plus particulièrement leurs axes géométriques longitudinaux respectifs XL22, XL24 et XL26, s'étendent de préférence dans un seul et même plan qui est parallèle à celui formé par les axes XL4, XL6 et XL8 des branches respectivement 4, 6 et 8.

Aux deux extrémités des trois bobines 22, 24 et 26 sont ménagées des oreilles 32 solidaires des noyaux 30 correspondants, desquels ces oreilles 32 viennent avantageusement de matière.

Les oreilles 32 forment des moyens d'assemblage des bobines 22, 24 et 26 sur la pièce ou plaque statorique 10, et plus particulièrement sur les branches de la partie statorique intérieure ou centrale 12, en comportant respectivement un orifice (non référencé) dans lequel peut être engagée par exemple une vis 34 qui est vissée dans les extrémités libres des branches respectivement 4, 6 et 8.

On comprend donc que ces trois bobines 22, 24 et 26 sont toutes mécaniquement indépendantes les unes des autres en étant rapportées et ancrées chacune sur deux extrémités libres respectivement de deux branches distinctes et voisines.

Les six oreilles 32 qui sont par l'un de leurs côtés de plus grande surface, qui est de préférence plan, en contact intime avec l'un des flancs latéraux des branches 4, 6 et 8, mais aussi les noyaux 30 et les extrémités libres 4b, 6b et 8b des branches 4, 6 et 8 matérialisent ensemble la partie statorique périphérique 14 et forment autour du rotor 1 et de la partie statorique intérieure ou centrale 12, un circuit magnétique CM1 à faible réluctance magnétique.

On précisera aussi que chacune des branches 4, 6 et 8 présente une forme de flèche dont la base constitue, d'une part, les premières extrémités 4a, 6a et 8a, et d'autres part, les épanouissements polaires correspondants EP4, EP6 et EP8. Le corps de ces branches ou flèches s'évase en largeur de cette base vers une tête ou pointe qui s'étend en direction de chacune des bobines correspondantes.

Ainsi, chacune des branches 4, 6 et 8 présente au voisinage de sa première extrémité 4a, 6a et 8a une largeur qui croît progressivement de cette première extrémité vers la deuxième extrémité 4b, 6b, 8b; l'épaisseur des branches 4, 6 et 8 qui est relativement faible, c'est-à-dire de l'ordre de 0,5 mm (0,5 · 10⁻³ m) étant quant à elle sensiblement constante.

La seconde extrémité ou extrémité libre 4b, 6b et 8b de ces branches 4, 6 et 8 forme un moyen de fixation mécanique du moteur sur un support (non représenté). Ainsi, ces extrémités libres 4b, 6b et 8b sont de préférence percées transversalement par un orifice débouchant, non référencé, destiné à accueillir un moyen d'assemblage du type vis-écrous, tel qu'une vis 40 engagée sur le support précité. On remarque aussi que la deuxième extrémité 4b, 6b et 8b de chacune des branches respectivement 4, 6 et 8 porte une oreille 32 de deux des trois bobines 22, 24 et 26.

Ces secondes extrémités ou extrémités libres 4b, 6b et 8b constituent par ailleurs une liaison mécanique et magnétique entre les noyaux 30 et entre les trois bobines 22, 24 et 28, mais aussi entre chaque épanouissement polaire EP4, EP6 et EP8 et deux des trois bobines 22, 24 et 26. On comprend déjà que le moteur selon l'invention est d'une conception extrêmement simple puisqu'il met en oeuvre trois bobines qui peuvent être quasiment identiques et réalisées en grandes séries, sans nécessiter l'utilisation de machines complexes. En effet, en étant toutes individualisées et mécaniquement indépendantes, ces bobines offrent un accès extrêmement aisé de l'enroulement 28 sur les noyaux 30. Par ailleurs, la pièce statorique 10 qui comporte les trois branches 4, 6 et 8 reliées par les isthmes 16 peut être réalisée à très grande vitesse par des techniques de production telles que le matriçage ou l'étampage (cette pièce étant on le répète constituée par une plaque présentant une épaisseur relativement faible) et elle peut être débitée à partir de fournitures en feuilles ou en rouleaux.

On remarquera de plus que les parties statoriques intérieure 12 et périphérique 14 sont formées essentiellement par la pièce statorique 10 en association avec les n bobines 22, 24 et 26. Ainsi, à part les bobines 22, 24 et 26, le moteur selon l'invention ne se compose que d'une pièce statorique 10 unique et monolithique. On a donc limité considérablement le nombre de pièces qui composent ce moteur. Par ailleurs, les n bobines 22, 24 et 26 sont montées sur la pièce statorique 10 indépendamment du montage de cette pièce sur son support, non représenté. Les bobines 22, 24 et 26 sont rapportées sur cette pièce et peuvent être remplacées indifféremment avant ou après montage de la pièce statorique 10 sur ledit support.

En outre, le montage des bobines rapportées 22, 24 et 26 sur la pièce monobloc 10 peut être aisément réalisé puisqu'il ne nécessite aucun positionnement particulièrement précis, mais uniquement une action de vissage, voire de rivetage des oreilles 32 sur les extrémités libres 4b, 6b et 8b des branches correspondantes 4, 6 et 8.

On précisera que les bobines 22, 24 et 26 peuvent présenter des allures autre que droites. En effet, elles peuvent être légèrement courbes (non représenté) ce qui améliore le rendement et la puissance du moteur sans préjudice de son encombrement.

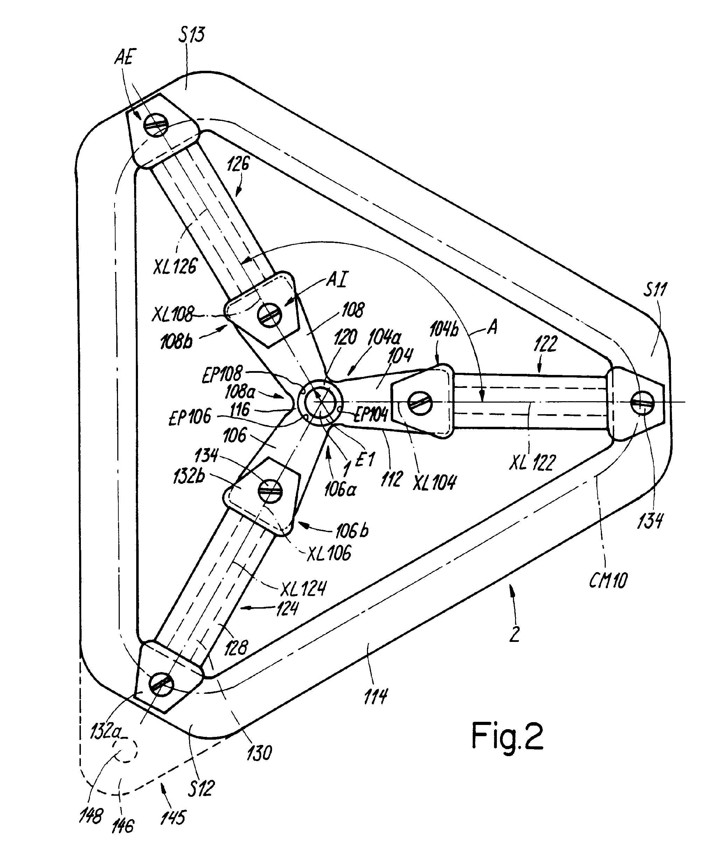

On se référera désormais à la figure 2 qui représente un deuxième mode de réalisation du moteur électromagnétique selon l'invention.

Ce moteur comporte, comme celui qui vient d'être décrit, un rotor 1 qui est monté pivotant par rapport et à l'intérieur d'un stator 2.

Toutefois, dans ce mode de réalisation, le stator 2 diffère sensiblement de celui du mode de réalisation qui vient d'être décrit, notamment en ce que la partie statorique périphérique 114 est constituée d'une seule et même pièce.

Cette pièce monobloc constituant la partie statorique périphérique 114 a une forme générale de triangle isocèle, et plus particulièrement de triangle équilatéral dont les sommets S11, S12 et S13 ont été tronqués. Le moteur électromagnétique selon ce deuxième mode de réalisation comporte aussi une partie statorique centrale ou intérieure 112 qui est pourvue de n branches (n=3 dans cet exemple) respectivement 104, 106 et 108 qui sont liées entre elles d'une façon identique à celle du mode de réalisation précédent, c'est-à-dire par l'intermédiaire d'isthmes 116.

Ces branches 104, 106 et 108 forment aussi à leur première extrémité 104a, 106a et 108a par laquelle elles sont solidaires, des épanouissements polaires EP104, EP106 et EP108 conformés par le flanc latéral d'un orifice circulaire 120 ménagé dans la région d'intersection des trois branches 104, 106 et 108. Comme dans le mode de réalisation précédent, le rotor 1 est monté mobile dans cet orifice 120 en regard des trois épanouissements polaires EP104, EP106 et EP108. Les n branches 104, 106 et 108 forment n pièces polaires.

De préférence, les trois branches 104, 106 et 108, particulièrement leurs axes géométriques longitudinaux respectifs XL104, XL106 et XL108 sont aussi décalés respectivement d'un angle A, de préférence égal à 120°. On remarquera que dans ce mode de réalisation, les deuxièmes extrémités ou extrémités libres 104b, 106b et 108b des branches 104, 106 et 108 sont respectivement reliées aux trois bobines d'excitation 122, 124 et 126, et plus particulièrement elles sont reliées chacune à l'une des oreilles 132b de ces bobines d'excitation.

Ainsi, et au vu du mode de réalisation précédent, on comprend que les bobines du moteur selon l'invention sont rapportées et sont respectivement ancrées mécaniquement au moins aux secondes extrémités ou extrémités libres des branches. Par ailleurs, ces bobines sont ancrées sur lesdites branches par l'intermédiaire de leur noyau 30, 130 qui est mécaniquement rapporté sur au moins l'une de ces branches.

Ces oreilles 132b sont fixées sur les secondes extrémités ou extrémités libres correspondantes 104b, 106b et 108b des branches 104, 106 et 108 par l'intermédiaire de vis de fixation 134.

L'autre oreille 132a de ces bobines 122, 124 et 126 est reliée à la partie statorique périphérique 114 qui forme à elle seule un circuit magnétique à faible réluctance CM10. Ces oreilles 132a sont aussi reliées à la partie statorique périphérique 114 par l'intermédiaire de vis de fixation 134.

Les bobines 122, 124 et 126 ont une configuration identique à celles du premier mode de réalisation, c'est-à-dire qu'elles comportent un noyau 130 autour duquel est bobiné un enroulement 128 d'un fil électriquement conducteur, formant une pluralité de spires.

Ces bobines 122, 124 et 126 sont aussi reliées à une alimentation, de préférence triphasée, par l'intermédiaire d'un circuit électronique de commande (non représenté). De préférence, ce circuit électronique de commande est conçu de sorte que les bobines d'excitation 122, 124 et 126 puissent être alimentées indépendamment.

On remarque donc que dans ce mode de réalisation, les bobines d'excitation 122, 124 et 126 qui sont rapportées sur les parties statoriques respectivement centrale 112 et périphérique 114 sont ancrées uniquement par l'une de leurs oreilles, et notamment l'oreille 132a qui est dite extérieure, au voisinage d'un des sommets S11, S12 et S13 de la partie statorique périphérique 114.

Les points d'ancrage des oreilles extérieures 132a sur la partie statorique 114, et plus particulièrement sur les sommets S11, S12 et S13, constituent pour les bobines 122, 124 et 126 des points d'ancrage les plus à l'extérieur, tandis que la liaison entre les oreilles opposées 132b et la partie statorique centrale 112 constitue pour ces mêmes bobines des points d'ancrage les plus à l'intérieur.

Ces points d'ancrage respectivement extérieurs et intérieurs sont référencés AE et AI.

On remarquera que dans ce mode de réalisation, ainsi que dans les trois autres qui seront ci-après décrits, la partie statorique centrale ou intérieure 112 est reliée à la partie statorique périphérique 114 par l'intermédiaire des trois bobines rapportées 122, 124 et 126.

Dans ce mode de réalisation particulier, les bobines d'excitation 122, 124 et 126 sont disposées par rapport aux branches 104, 106 et 108 de sorte que leurs axes géométriques longitudinaux respectivement XL122, XL124 et XL128 coïncident sensiblement avec les axes géométriques longitudinaux XL104, XL106 et XL108 des branches respectivement 104, 106 et 108.

On comprend que le moteur électromagnétique selon ce mode de réalisation est aussi d'une conception extrêmement simple, ce qui lui permet d'être réalisé par des méthodes de déformation à froid, ou à faible température.

En effet, les parties statoriques respectivement centrale 112 et périphérique 114 sont constituées d'une feuille mince d'un matériau de préférence à haute perméabilité magnétique qui peut être débitée de pans ou de rouleaux laminés.

De plus, on remarquera qu'avec un même et unique poinçon, on peut fabriquer simultanément les parties statoriques centrale 112 et prériphérique 114.

De plus l'assemblage des différentes pièces entre elles, à savoir des deux parties statoriques et des trois bobines d'excitation est réalisable de façon automatisée à grande vitesse, puisque le positionnement relatif de toutes ces pièces les unes par rapport aux autres n'a aucune incidence sur le comportement magnétique du moteur, à l'exception bien évidemment de la position du rotor 1 par rapport à la partie statorique centrale 112, et notamment par rapport aux trois épanouissements polaires EP104, EP106 et EP108.

La mise en place de ce moteur électromagnétique sur un support destiné à le recevoir peut être réalisée par des moyens de fixation 145 ménagés sur la partie statorique périphérique 114, et plus particulièrement par des extensions 146 (dont seulement une est représentée) ménagées sur cette partie statorique périphérique 114, au niveau des sommets respectivement S11, S12 et S13. Ces moyens de fixation représentés en traits interrompus comportent un orifice 148 conformé pour recevoir une vis de fixation, non représentée.

On remarquera aussi que dans ce mode de réalisation, les extrémités libres 104b, 106b et 108b des branches 104, 106 et 108 sont toutes orientées respectivement en direction de l'un des sommets S11, S12 et S13 de la partie statorique périphérique 114.

Plus particulièrement, l'extrémité libre 104b, 106b et 108b de chaque branche 104, 106 et 108 est orientée en direction du point d'ancrage extérieur AE de la bobine qu'elle supporte.

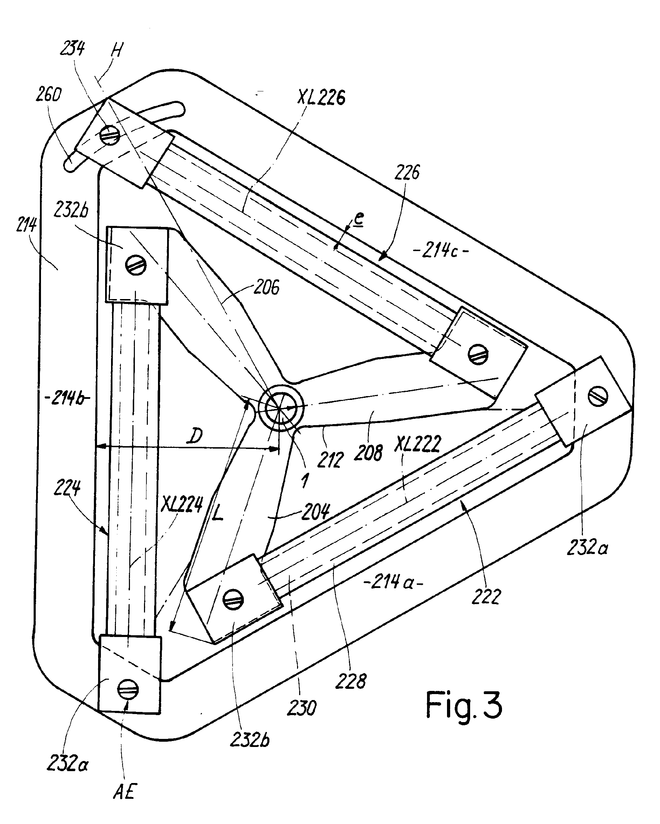

La figure 3 représente un troisième mode de réalisation du moteur électromagnétique selon l'invention, qui comporte une partie statorique périphérique 214 identique à la partie statorique 114 précédemment décrite.

La partie statorique intérieure 212 présente une région centrale sensiblement identique à celle de la partie statorique 112. Elle est aussi percée d'un orifice débouchant 220 destiné à recevoir le rotor 1.

Toutefois, dans ce mode de réalisation, la configuration de la partie statorique intérieure 212 est telle qu'elle permet d'équiper ce moteur de bobines 222, 224 et 226 plus longues que celle du mode de réalisation précédent, et donc qui présentent des caractéristiques de sortie supérieures.

Ces bobines 222, 224 et 226 sont toutefois construites exactement sur le même principe, à savoir elles comportent un noyau 230 autour duquel est bobiné un enroulement 228 d'un fil électriquement conducteur, disposé en spires adjacentes et coaxiales. Chaque noyau 230 se termine à ses deux extrémités par deux oreilles respectivement 232a et 232b.

Des bobines de grande longueur, telles que les bobines 222, 224 et 226 permettent de prévoir un enroulement 228 présentant soit un nombre de spires relativement élevé, soit un fil électriquement conducteur d'un diamètre supérieur à celui qui peut être prévu pour les bobines de courte dimension.

On comprend donc qu'une telle disposition permet d'élever sensiblement la puissance de sortie du moteur.

Les trois branches 204, 206 et 208 de la partie statorique intérieure ou centrale 212 sont d'une longueur plus importante que celles de la partie statorique 112 précédemment décrite, leur longueur respective L étant telle qu'elle est supérieure à la distance D entre l'axe de rotation du rotor XR1, qui entre autres est confondu avec le centre de gravité de la partie statorique périphérique 214, et le bord intérieur de cette partie statorique périphérique 214.

Par ailleurs, les points d'ancrage extérieurs AE des oreilles 232a ne coïncident plus avec les hauteurs H.

Ces points d'ancrage extérieurs AE des bobines 222, 224 et 226 sont donc décalés latéralement par rapport aux hauteurs H de la partie statorique périphérique 214, de sorte que ces bobines d'excitation 222, 224 et 226 sont disposées de façon sensiblement parallèle aux bras 214a, 214b et 214c de la partie statorique périphérique 214. Bien entendu, un espace e est laissé entre le pourtour extérieur des bobines d'excitation et le bord intérieur de la partie statorique périphérique 214.

On constate donc que les axes géométriques longitudinaux XL222, XL224 et XL226 des bobines ne sont plus concourants entre eux au miveau de l'axe de rotation du rotor XR1. Au contraire, ils s'intersectent sensiblement au niveau de leur point d'ancrage extérieur AE. Ainsi, alors que la partie statorique centrale ou intérieure 212 a une configuration géomètrique du type en "étoile", les bobines 222, 224 et 226 présentent une configuration du type en "triangle".

En considérant par exemple la bobine 224, on remarquera que son oreille intérieure 232b qui, on le rappelle est par définition ancrée sur la partie statorique centrale 212, est reliée à la branche 206 qui dans ce mode de réalisation est orientée dans une autre direction que celle du point d'ancrage extérieur AE de cette bobine 224.

Ainsi, pour les trois bobines 222, 224 et 226 leur oreille intérieure 232b est reliée à l'une des branches de la partie statorique centrale 212 qui est orientée dans une direction décalée par rapport au point d'ancrage de l'oreille extérieure 232a correspondant à cette oreille intérieure.

On observe même que dans cet exemple particulier, l'oreille intérieure 232b de chaque bobine est reliée à l'une des branches de la partie statorique intérieure ou centrale 212 qui est orientée vers le point d'ancrage extérieur AE de l'une des bobines voisines. On comprendra que grâce à cette disposition, on optimise l'espace intérieur qui est ménagé dans la partie statorique périphérique en améliorant les caractéristiques de sortie du moteur. On comprend aussi que sur la base d'une même partie statorique périphérique 114 (figure 2) et 214 (figure 3), c'est-à-dire de même forme et de même dimension, on peut réaliser des moteurs ayant des caractéristiques de sortie différentes. Ceci permet bien évidemment de prévoir pour toutes les parties statoriques périphériques une forme standard dont le contour détermine l'encombrement extérieur du moteur. Une fois cette partie statorique périphérique montée sur sont support, on peut lui associer différents "couples" bobines-partie statorique centrale, tels que par exemple la partie statorique intérieure ou centrale 112 équipée des bobines 122, 124 et 126 ou la partie statorique intérieure ou centrale 212 équipée des bobines 222, 224 et 226.

A cet effet, les points d'ancrage extérieurs AE des bobines d'excitation sur la partie statorique périphérique 214 est de préférence constitués par des lumières oblongues 260, droites ou courbes (dont une seule a été représentée) dans lesquelles sont engagés des systèmes vis-écrous, tels que des boulons 234, retenant les oreilles extérieures 232a.

On remarquera aussi qu'une telle disposition, dans laquelle les deux parties statoriques respectivement périphérique 214 et centrale 212, comme dans le mode de réalisation précédent, sont mécaniquement distinctes et indépendantes et sur lesquelles les bobines d'excitation sont rapportées, permet de disposer la partie statorique centrale 212 dans de multiples positions angulaires ( bien entendu avec l'utilisation de bobines d'excitation de longueurs différentes). Dès lors, on peut définir aisément des positions d'équilibre stable du rotor 1, qui on le rappelle sont définies par l'orientation des épanouissements polaires, indépendamment du positionnement de la partie statorique périphérique 214. On précisera que ces positions d'équilibre stable peuvent être définies par d'autres moyens, tels que par exemple par la forme de l'orifice 220 qui peut comporter des alvéoles de positionnement non représentées. Ainsi, en prévoyant des moyens d'ajustement, telles que des lumières oblongues dans les oreilles de fixation 232a et/ou 232b, et/ou dans les branches du stator 212, on peut aisément ajuster les positions d'équilibre stables du rotor 1 par rapport à un mécanisme à entraîner (non représenté), alors que le moteur électromagnétique est définitivement installé sur son support, ce qui permet très avantageusement l'ajustement par exemple d'un élément indicateur du mécanisme à entraîner et éventuellement son initialisation autour de positions particulières.

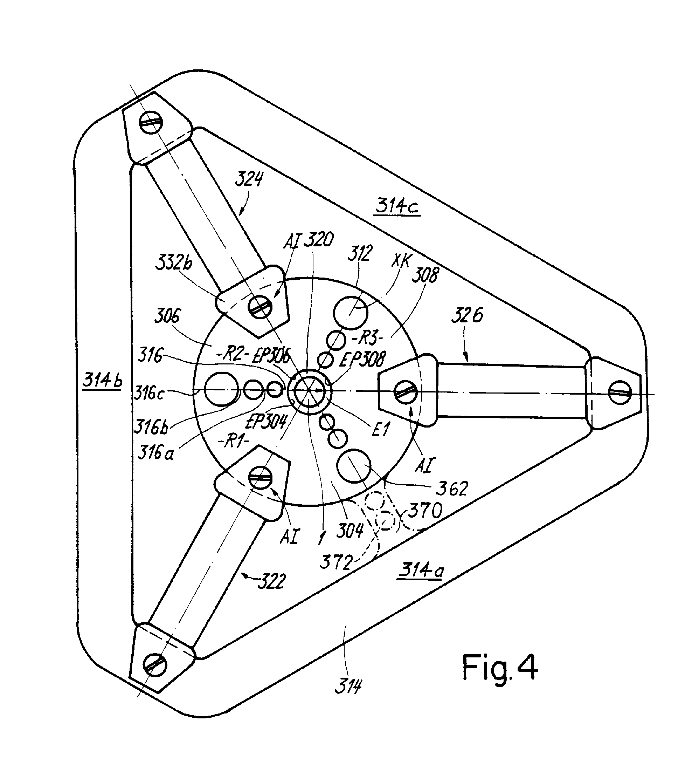

La figure 4 représente un quatrième mode de réalisation dans lequel la partie statorique périphérique 314 et les trois bobines d'excitation respectivement 322, 324 et 326 sont identiques à celles du deuxième mode de réalisation ci-avant décrit et représenté à la figure 2.

Dans ce quatrième mode de réalisation, la partie statorique intérieure ou centrale 312 est constituée par un disque annulaire dont l'orifice central 320 est conformé pour recevoir le rotor 1. Ce disque annulaire qui forme la partie statorique centrale 312 comporte un certain nombre d'évidements 362 qui s'étendent en alignement et à une faible distance les uns des autres de l'orifice central 320 jusqu'au bord périphérique extérieur de ce disque.

Ces évidements 362 qui ont ici une forme circulaire sont ménagés les uns à côté des autres sur des axes géométrique XK, s'étendant radialement du centre de l'orifice 320, de façon concourante en ce point, à savoir en coïncidance avec l'axe de rotation XR1 du rotor 1.

Ces axes XK sur lesquels sont ménagés les évidements 362 sont disposés de part et d'autre des points d'ancrage AI des oreilles intérieures 332b. Ces évidements 362, et plus particulièrement ces groupes d'évidements, constituent des moyens de saturation du flux magnétique dont la fonction est identique à celle des isthmes 16, 116 et 216 des modes de réalisation précédents. Plus particulièrement, on retrouve des isthmes 316 qui sont équivalents aux isthmes 16, 116, 216, mais qui sont associés à des isthmes 316a, b, c, disposés les uns à la suite des autres en rangées et dans des orientation parallèles, orthogonalement aux axes XK. Les régions R1, R2 et R3 du disque annulaire 312 qui sont laissées entre les trois groupes d'évidements et d'isthmes 362 constituent dans la partie statorique centrale, comme les branches des parties statoriques centrales précédemment décrites, des éléments de guidage du flux magnétique 304, 306 et 308 à une extrémité desquels sont formés des épanouissements polaires EP304, EP306 et EP308. On constate là aussi que cette partie statorique intérieure ou centrale 312 est d'une conception extrêmement simple et qu'elle peut être aisément réalisée par étampage ou emboutissage. De plus sa structure alvéolée lui confère une certaine rigidité assurant une bonne solidité du stator 2.

Par ailleurs, on représenté en traits mixtes sur la figure 4, une patte de liaison 370 permettant de lier mécaniquement la partie statorique intérieure 312 à la partie statorique périphérique 314. Dans cette patte sont ménagés d'autres évidements 372 destinés à former des moyens supplémentaires de saturation du flux magnétique et à empêcher le passage de ce flux au niveau de la patte 370. Les deux parties statoriques 312 et 314 forment donc une pièce unique. On a représenté une seule patte 370, mais d'autres peuvent être prévues entre la partie statorique 312 et les bras 314a, 314b et 314 c de la partie statorique périphérique 314, s'étendant de façon diamétralement opposée aux bobines 322 à 326 en regard des orifices 362 et venant de matière avec les deux parties statoriques 312 et 314.

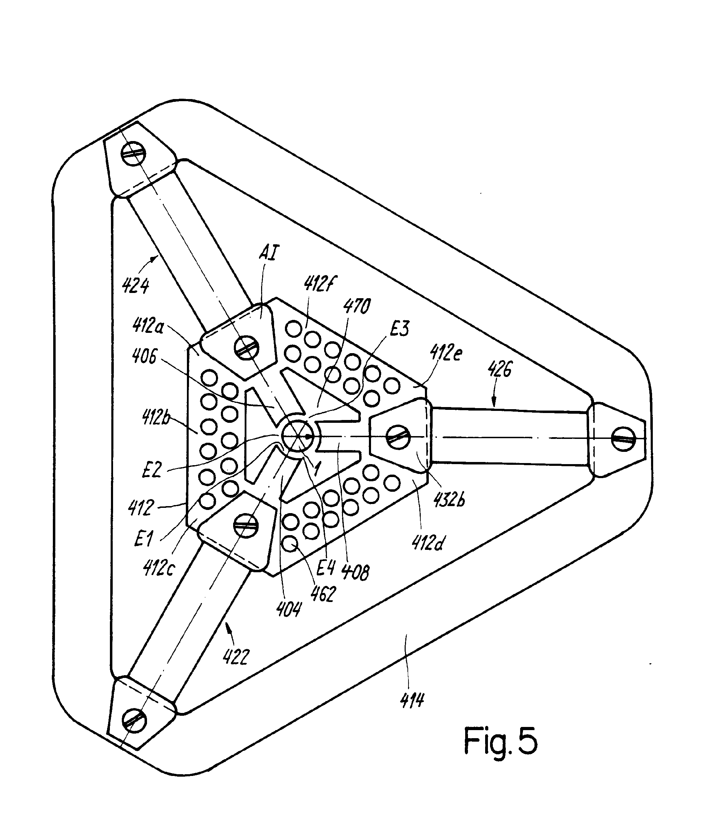

La figure 5 représente un mode de réalisation dans lequel la partie statorique périphérique 414, mais aussi les bobines d'excitation 422, 424 et 426 sont d'une construction tout à fait identique au mode de réalisation qui vient d'être décrit. Dans ce mode de réalisation, la partie statorique centrale ou intérieure 412 est constituée, comme la partie statorique périphérique 414, sous la forme d'une pièce monobloc annulaire refermée sur elle-même. Cette pièce, qui est constituée par une feuille mince réalisée en un matériau de préférence à haute perméabilité magnétique, a une allure générale de polygône du type hexagonal, ou plus particulièrement de triangle isocèle et notamment équilatéral auquel on a tronqué les sommets. Cette partie statorique centrale 412 comporte donc six bras respectivement 412a à 412f, les bras 412a, 412c et 412e formant les points d'ancrage intérieurs AI des oreilles intérieures 432b des bobines d'excitation respectivemement 422, 424 et 426. Les seconds bras, respectivement 412b, 412d et 412f qui forment la liaison entre les premiers bras 412a, 412c et 412e sont percés axialement d'un certain nombre d'évidements débouchants 462 constituant comme dans le mode de réalisation précédent, des moyens de saturation du flux magnétique, dits seconds moyens de saturation.

De plus, cette partie statorique 412 comprend des entrefers E2 à E4 laissés entre les branches respectivement 404, 406 et 408, et notamment entre leurs épanouissements polaires respectifs, et ce en plus du premier entrefer E1 ménagé entre le rotor 1 et les épanouissement polaires, comme dans les modes de réalisation précédents. On remarque aussi que les branches de la partie statorique centrale 412 s'étendent dans une direction normale aux bras 412a, 412c et 412e qui supportent les bobines d'excitation 422, 424 et 426. La région centrale de la partie statorique 412 qui est ménagée entre les épanouissements polaires formés par les extrémités libres des branches 404, 406 et 408 est conformée pour recevoir le rotor 1.

On remarque donc que dans ce mode de réalisation les extrémités libres ou premières extrémités des branches 404, 406 et 408 constituent les épanouissements polaires du stator 2, tandis que les autres extrémités ou secondes extrémités de ces branches sont liées entre elles par l'intermédiaire des bras 412b, 412d et 412f formant par leur structure alvéolée les seconds moyens de saturation du flux magnétique. Les secondes extrémités de ces branches reçoivent par ailleurs les bobines d'excitation. On comprend aussi que la partie statorique centrale 412 peut être aisément réalisée par une opération de déformation d'une feuille mince d'un matériau approprié.

On précisera que dans les modes de réalisation des figures 2 à 5, les bras de la partie statorique périphérique peuvent être pourvus de bobines, actives ou captrices, non représentées.

## Revendications

1. Moteur électromagnétique susceptible de fonctionner avec un mode d'alimentation n-phasé, n étant ≧ à 3, et du type comprenant :
- un rotor (1) qui comporte un aimant permanent et qui est susceptible de délivrer un couple moteur à un mécanisme à entraîner,
- un stator (2) pourvu, d'une part d'une partie statorique périphérique (14) formant un circuit magnétique à faible reluctance (CM), et d'autre part, d'une partie statorique intérieure (12) conformée pour recevoir le rotor (1), cette partie statorique intérieure étant entourée par la partie statorique périphérique (14),
- n bobines (22, 24, 26) liées magnétiquement au stator et susceptibles de fournir un flux magnétique par l'intermédiaire d'un noyau (30), ces bobines pouvant être reliées par l'intermédiaire d'un circuit de commande à une alimentation électrique pour être alimentées respectivement par n phase de cette alimentation,
- n pièces de guidage du flux magnétique (4, 6, 8; 304, 306, 308) ménagées sur la partie statorique intérieure et comportant des premières et secondes extrémités, lesdites premières extrémités formant respectivement n épanouissements polaires (EP) et n pièces polaires, ledit rotor (1) étant monté pivotant entre ces épanouissements polaires et à une distance radiale de ceux-ci qui forme au moins un premier entrefer (E1), tandis que lesdites bobines sont magnétiquement couplées auxdits épanouissements polaires par l'intermédiaire desdites pièces de guidage de flux, caractérisé en ce que ladite partie statorique intérieure est une plaque mince ayant une forme d'étoile dont les branches qui forment lesdites pièces de guidage du flux magnétique s'étendent vers la partie statorique périphérique (14), lesdites bobines (22, 24, 26) étant rapportées et respectivement ancrées mécaniquement au moins aux secondes extrémités ou extrémités libres desdites branches.

2. Moteur selon la revendication 1, caractérisé en ce que les bobines (22, 24, 26) sont ancrées sur lesdites branches par l'intermédiaire de leur noyau (30) qui est mécaniquement rapporté sur au moins l'une de ces branches.

3. Moteur selon la revendication 1 ou 2, caractérisé en ce que les parties statoriques intérieure (12) et périphérique (14) sont formées essentiellement par une pièce statorique unique et monolithique (10), en association avec les n bobines (22, 24, 26).

4. Moteur selon l'une des revendications 1 à 3, caractérisé en ce que les n bobines (22, 24, 26) sont montées sur la pièce statorique (10) indépendamment du montage de cette pièce sur un support, les n bobines étant rapportées sur cette pièce et étant susceptibles d'être remplacées indifféremment avant ou après montage de la pièce statorique (10) sur ledit support.

5. Moteur selon la revendication 4, caractérisé en ce que ladite deuxième extrémité de chacune desdites branches (4, 6, 8) porte une oreille de deux des n bobines (22, 24, 26), ainsi qu'un moyen de fixation mécanique (40) du moteur sur un support.

6. Moteur selon l'une quelconque des revendications précédentes, caractérisé en ce que la partie statorique périphérique (14) est formée par les noyaux (30) des bobines, prolongés de leurs oreilles respectives (32), et par la deuxième extrémité (4b, 6b, 8b) desdites branches (4, 6, 8), cette deuxième extrémité (4b, 6b, 8b) formant liaison mécanique et magnétique au moins entre lesdits noyaux (30).

7. Moteur selon l'une des revendications 1 à 4, caractérisé en ce que les deux parties statoriques respectivement périphérique (114) et intérieure (112) sont mécaniquement distinctes et indépendantes, la partie statorique intérieure (112) qui est rapportée sur la partie statorique périphérique (114) par l'intermédiaire des bobines (122, 124, 126) étant susceptible d'occuper par rapport à cette partie statorique périphérique (114) de multiples positions angulaires.

8. Moteur selon la revendication 7, caractérisé en ce que la partie statorique périphérique (114) comporte une forme de triangle au moins isocèle, et de préférence équilatéral.

9. Moteur selon la revendication 8, caractérisé en ce que chaque bobine (122, 124, 126) qui est rapportée sur le stator (2), est ancrée par l'une de ses oreilles, dites oreilles extérieures (132a), au voisinage d'un des sommets de la partie statorique périphérique (114), en un point d'ancrage, dit point d'ancrage extérieur (AE).

10. Moteur selon la revendication 9, caractérisé en ce que l'oreille intérieure (232b) de chaque bobine (222, 224, 226), qui est reliée à la partie statorique intérieure (212), est reliée à l'une des branches de cette partie statorique (212) qui est orientée dans une direction sensiblement décalée par rapport au point d'ancrage extérieure (AE) de cette même bobine sur la partie statorique périphérique (214).

11. Moteur selon la revendication 10, caractérisé en ce que l'oreille intérieure (232b) de chaque bobine est reliée à l'une des branches (204, 206, 208) de la partie statorique intérieure (212), qui est orientée vers le point d'ancrage extérieur (AE) de l'une des bobines voisines.

12. Moteur selon la revendication 11, caractérisé en ce que les bobines (222, 224, 226) sont disposées de façon sensiblement parallèle à des bras (214a, 214b, 214c) de la partie statorique périphérique (214).

13. Moteur selon l'une quelconque des revendications précédentes, caractérisé en ce que l'aimant permanent du rotor (1) est bipolaire.

## Patentansprüche

1. Elektromagnetischer Motor, der mit einem n-phasigen Speisemodus betreibbar ist, wobei n ≧ 3 ist, und von der Bauart, die umfaßt:
- einen Rotor (1), der einen Permanentmagneten umfaßt und ein Motormoment an einen anzutreibenden Mechanismus abgeben kann,
- einen Stator (2), der einerseits mit einer peripheren Statorpartie (14) versehen ist, die einen Magnetkreis niedriger Reluktanz (CM) bildet, und andererseits einer inneren Statorpartie (12), angepaßt zur Aufnahme des Rotors (1), welche innere Statorpartie von der peripheren Statorpartie (14) umschlossen ist,
- n Spulen (22, 24, 26), die magnetisch mit dem Stator verkoppelt sind und einen Magnetfluß über einen Kern (30) erzeugen können, welche Spulen über eine Steuerschaltung mit einer elektrischen Speisequelle verbindbar sind, um jeweils mit n Phasen dieser Speisung erregt zu werden,
- n Magnetflußführungsteile (4, 6, 8; 304, 306, 308), die auf der inneren Statorpartie angeordnet sind und erste bzw. zweite Enden umfassen, welche ersten Enden n Polstücke (EP) bzw. n Polteile bilden, wobei der Rotor (1) drehbeweglich zwischen diesen Polstücken angeordnet ist und in einem Radialabstand von diesen, der mindestens einen Luftspalt (E1) bildet, während die Spulen mit den Polstücken über die Flußführungsteile magnetisch verkoppelt sind, dadurch gekennzeichnet, daß die innere Statorpartie eine dünne Platte in Form eines Sterns ist, dessen Arme, welche die Magnetflußführungsstücke bilden, sich in Richtung der peripheren Statorpartie (14) erstrecken, wobei die Spulen (22, 24, 26) versetzt und jeweils mechanisch verankert sind an mindestens den zweiten Enden oder freien Enden dieser Arme.

2. Motor nach Anspruch 1, dadurch gekennzeichnet, daß die Spulen (22, 24, 26) auf den Armen verankert sind über ihren Kern (30), der mechanisch auf mindestens einem dieser Arme befestigt ist.

3. Motor nach Anspruch 1 oder 2, dadurch gekennzeichnet, daß die innere (12) und periphere (14) Statorpartie im wesentlichen von einem einzigen und monolithischen Statorteil (10) gebildet sind in Verbindung mit den n Spulen (22, 24, 26).

4. Motor nach einem der Ansprüche 1 bis 3, dadurch gekennzeichnet, daß die n Spulen (22, 24, 26) auf dem Statorteil (10) montiert sind unabhängig von der Montage dieses Teils auf einem Support, wobei die n Spulen auf diesem Teil angeordnet sind und vor oder nach Montage des Statorteils (10) auf dem Support austauschbar sind.

5. Motor nach Anspruch 4, dadurch gekennzeichnet, daß das zweite Ende jedes der Arme (4, 6, 8) ein Auge für zwei der n Spulen (22, 24, 26) aufweist wie auch ein mechanisches Befestigungsmittel (40) des Motors auf einem Support.

6. Motor nach einem der vorangehenden Ansprüche, dadurch gekennzeichnet, daß die periphere Statorpartie (14) von den Kernen (30) der Spulen gebildet ist, verlängert um ihre jeweiligen Augen (32), und von dem zweiten Ende (4b, 6b, 8b) der Arme (4, 6, 8), wobei dieses zweite Ende (4b, 6b, 8b) eine mechanische und magnetische Verbindung zumindest zwischen den Kernen (30) herstellt.

7. Motor nach einem der Ansprüche 1 bis 4, dadurch gekennzeichnet, daß die beiden Statorpartien, der periphere (114) und der innere (112) mechanisch voneinander getrennt und unabhängig sind, wobei die innere Statorpartie (112) auf der äußeren Statorpartie (114) angeordnet ist mittels Spulen (122, 124, 126), die relativ zu der peripheren Statorpartie (114) mehrere Winkelpositionen einnehmen können.

8. Motor nach Anspruch 7, dadurch gekennzeichnet, daß die periphere Statorpartie (114) eine mindestens gleichschenklige und vorzugsweise gleichseitige Dreieckform umfaßt.

9. Motor nach Anspruch 8, dadurch gekennzeichnet, daß jede Spule (122, 124, 126), die auf dem Stator (2) angeordnet ist, mittels eines ihrer Augen verankert ist, das als äußeres Auge (132a) bezeichnet ist, benachbart einer der Spitzen der peripheren Statorpartie (114) in einem Verankerungspunkt, der als äußerer Verankerungspunkt bezeichnet wird.

10. Motor nach Anspruch 9, dadurch gekennzeichnet, daß das innere Auge (232b) jeder Spule (222, 224, 226), das mit der inneren Statorpartie (212) verbunden ist, mit einem der Arme dieser Statorpartie (212) verbunden ist, der in einer Richtung im wesentlichen versetzt bezüglich des äußeren Verankerungspunktes (AE) derselben Spule auf der peripheren Statorpartie (214) orientiert ist.

11. Motor nach Anspruch 10, dadurch gekennzeichnet, daß das innere Auge (232b) jede Spule mit einem der Arme (204, 206, 208) der inneren Statorpartie (212) verbunden ist, welcher in Richtung des äußeren Verankerungspunktes (AE) einer der benachbarten Spulen orientiert ist.

12. Motor nach Anspruch 11, dadurch gekennzeichnet, daß die Spulen (222, 224, 226) derart angeordnet sind, daß sie im wesentlichen parallel zu den Armen (214a, 214b, 214c) der peripheren Statorpartie (214) verlaufen.

13. Motor nach einem der vorangehenden Ansprüche, dadurch gekennzeichnet, daß der Permanentmagnet des Rotors (1) zweipolig ist.

## Claims

1. Electromagnetic micromotor adapted to operate in an n-phase energization mode, n being ≧ 3, and of the type comprising :
- a rotor (1) which includes a permanent magnet and which is capable of furnishing a motor couple to a mechanism to be driven,
- a stator (2) provided, on the one hand, with a peripheral stator portion (14) forming a low reluctance magnetic circuit (CM) and, on the other hand, with an interior stator portion (12) shaped to receive the rotor (1), such interior stator portion being surrounded by a peripheral stator portion (14),
- n windings (22, 24, 26) magnetically coupled to the stator and capable of furnishing a magnetic flux through a core (30), such windings being adapted to be coupled through a control circuit to an electrical source so as to be respectively energized by n phases for said source,
- n guide pieces for the magnetic flux (4, 6, 8; 304, 306, 308) arranged on the interior stator portion and including first and second ends, said first ends respectively forming n polar expansions (EP) and n polar pieces, said rotor (1) being pivotally mounted between such polar expansions and at a radial distance therefrom which forms at least a first gap (E1), while said windings are magnetically coupled to said polar expansions through said pieces for the guiding of the flux, characterized in that said interior stator portion is a thin plate having the shape of a star the branches of which, which form said guide pieces for the flux, extend towards the peripheral stator portion (14), said windings (22, 24, 26) being mounted on and respectively anchored mechanically at least to the second or free ends of said branches.

2. Motor according to claim 1, characterized in that the windings (22, 24, 26) are anchored on said branches through their core (30) which is mechanically mounted on at least one of such branches.

3. Motor according to claim 1 or 2, characterized in that the interior (12) and peripheral (14) stator portions are primarily formed by an unique monolithic stator piece (10) in association with the n windings (22, 24, 26).

4. Motor according to one of claims 1 to 3, characterized in that the n windings (22, 24, 26) are mounted on the stator piece (10) independently of the assembly of such piece on a support, the n windings being mounted on such piece and being capable of being indiscriminately replaced before or after assembly of the stator piece on said support.

5. Motor according to claim 4, characterized in that said second end of each of said branches (4, 6, 8) bears a lug from two of the n windings (22, 24, 26) as well as a mechanical securing means (40) for the motor onto a support.

6. Motor according to any one of the preceding claims, characterized in that the peripheral stator portion (14) is formed by the cores (30) of the windings, extended by their respective lugs (32) and by the second end (4b, 6b, 8b) of said branches (4, 6, 8), such second end (4b, 6b, 8b) forming at least a mechanical and magnetic connection between said cores (30).

7. Motor according to one of claims 1 to 4, characterized in that the two respective stator portions, peripheral (114) and interior (112), are mechanically distinct and independent, the interior stator portion (112) which is mounted on the peripheral stator portion (114) through the windings (122, 124, 126) being capable of occupying multiple angular positions relative to such peripheral stator portion (114).

8. Motor according to claim 7, characterized in that the peripheral stator portion (114) comprises a triangular form which is at least isoceles, and preferably equilateral.

9. Motor according to claim 8, characterized in that each winding (122, 124, 126) which is mounted on the stator (2) is anchored by the one of its lugs, referred to as exterior lugs (132a), in the vicinity of one of the vertices of the peripheral stator portion (114) at an anchor point, referred to as exterior anchor point (AE).

10. Motor according to claim 9, characterized in that the interior lug (232b) of each winding (222, 224, 226), which is coupled to the interior stator portion (212), is coupled to one of the branches of such stator portion (212) which is oriented in a direction substantially shifted relative to the exterior anchor point (AE) of such same winding onto the peripheral stator portion (214).

11. Motor according to claim 10, characterized in that the interior lug (232b) of each winding is coupled to one of the branches (204, 206, 208) of the interior stator portion (212) which is oriented towards the exterior anchor point (AE) of one of the neighbouring windings.

12. Motor according to claim 11, characterized in that the windings (222, 224, 226) are arranged in a manner substantially parallel to the arms (214a, 214b, 214c) of the peripheral stator portion (214).

13. Motor according to any one of the preceding claims, characterized in that the permanent magnet of the rotor (1) is bipolar.
